Europäisches Patentamt

European Patent Office

Office européen des brevets

(19)

(11) Veröffentlichungsnummer: **0 340 654**
**A2**

(12) **EUROPÄISCHE PATENTANMELDUNG**

(21) Anmeldenummer: 89107735.6

(51) Int. Cl.⁴: **G01N 27/30**

(22) Anmeldetag: 28.04.89

(30) Priorität: 30.04.88 DE 3814735

(43) Veröffentlichungstag der Anmeldung:
08.11.89 Patentblatt 89/45

(84) Benannte Vertragsstaaten:
AT BE CH DE ES FR GB GR IT LI LU NL SE

(71) Anmelder: **Conducta Gesellschaft für Mess-
und Regeltechnik mbH & Co.**
**Dieselstrasse 24**
**D-7016 Gerlingen b. Stuttgart(DE)**

(72) Erfinder: **Kreuer, Klaus-Dieter, Dr. rer.nat.**
**Danziger Strasse 3**
**D-7030 Böblingen(DE)**
Erfinder: **Kohler, Heinz, Dr. rer. nat.**
**Fichtenstrasse 44**
**D-7258 Heimsheim(DE)**

(74) Vertreter: **Otte, Peter, Dipl.-Ing.**
**Tiroler Strasse 15**
**D-7250 Leonberg(DE)**

(54) **Potentiometrischer Sensor zur Bestimmung der Sauerstoffaktivität bei niedrigen Temperaturen.**

(57) Bei einem potentiometrischen Sensor zur Bestimmung des Sauerstoff-Partialdrucks in einer flüssigen oder gasförmigen Probe, der eine Referenzhalbzelle und eine sauerstoffsensitive Halbzelle umfaßt, die vorzugsweise beide in eine Innenelektrytlösung eintauchen, die gegenüber der zu messenden Probe durch eine sauerstoffpermeable Membran abgetrennt ist, wird vorgeschlagen, die sauerstoffsensitive Halbzelle aus einem elektronisch leitenden Oxid, das mindestens ein Übergangsmetall der IV., V., VI., VII. oder VIII. Nebengruppe des Periodensystems enthält und Oxide der Elemente aus der II. Hauptgruppe und III. Nebengruppe des Periodensystems enthalten kann, herzustellen bzw. ein zur Strukturfamilie der Perowskite gehörendes Elektrodenmaterial zu verwenden.

## Fig.1

## Potentiometrischer Sensor zur Bestimmung der Sauerstoffaktivität bei niedrigen Temperaturen

Stand der Technik

Die Verwendung von Übergangsmetalloxiden als Sensormaterialien zur Bestimmung von Sauerstoff-Aktivitäten in Gasgemischen unter Betreibung des Sensors bei hohen Temperaturen (T >300° C) ist Stand der Technik. Die Meßgröße ist entweder die Leitfähigkeit von p- bzw. n-leitenden Halbleitern, die teilweise stark vom $O_2$-Partialdruck des Meßmediums abhängt oder wie z.B. bei dem als Lambda-Sonde bekannt gewordenen System $p_{O_2}',Pt/ZrO_2/Pt,p_{O_2}''$ wird die EMK zwischen den beiden Pt-Elektroden gemessen. Das zuletzt genannte System zeichnet sich durch Nernstsches Potentialverhalten, sehr schnelles Ansprechverhalten und sehr gute Reversibilität bzw. Langzeitstabilität aus. Beiden Systemen gemeinsam ist jedoch, daß sie bei Temperaturen oberhalb 300° C betrieben werden müssen und damit nicht zur Anwendung kommen können, wenn niedrige Sensortemperaturen unumgänglich sind (z.B. in wässrigen Lösungen).

Die Erfindung geht aus von einem potentiometrischen Sensor nach dem Oberbegriff des Anspruchs 1, der vor allem geeignet ist für Anwendungen in gasförmigen oder flüssigen Proben bei Temperaturen unterhalb des Siedepunktes von wässrigen Lösungen.

Ein bekanntes Verfahren dieser Art (US-PS 3 856 634) verwendet für die potentiometrische Sauerstoffmessung als Elektrodenmaterial für die sauerstoffsensitive Elektrode sogenannte Wolfram-Bronzen, welche neben W nur einwertige Kationen, nämlich Alkalimetalle bzw. T1 enthalten. Bei diesen als Einschlußverbindungen bekannten Bronzematerialien ergibt sich ein die Sensitivität zu Sauerstoff verursachender Potential generierender Mechanismus an der Elektrodenoberfläche durch Adsorption von $O_2$-Molekülen, die allerdings von der Anwesenheit von $OH^-$-Ionen an der Grenzfläche gefördert wird.

Problematisch ist bei dieser bekannten potentiometrischen Sauerstoffmessung allerdings der Umstand, daß die angegebenen Verbindungen genau in dem pH-Bereich, der für die Potentialbildung durch Reaktion mit Sauerstoff günstig ist, nämlich oberhalb eines Wertes von etwa pH 9, chemisch zunehmend unstabil sind. Es ergibt sich daher eine schlechte Reproduzierbarkeit der in den dortigen Tabellen angegebenen gemessenen Potentiale, ein hohes Driftverhalten des Sensorpotentials, eine erhebliche Veränderung der Sauerstoff-Sensitivität mit der Zeit, ferner eine Abhängigkeit der gemessenen Potentiale von der Rührgeschwindigkeit und nicht zuletzt der relativ geringe Sensitivitätsbereich (0,4 - 8,3 ppm), die hauptsächlich die Folge der erwähnten chemischen Instabilität sein dürften. Alkalimetall-Wolframatbronzen sind im wesentlichen nur stabil unterhalb pH 7, also im sauren Bereich, während der hier auszunutzende Effekt der potentiometrischen Sauerstoffmessung im alkalischen Bereich stattfindet.

Bei einem weiteren bekannten potentiometrischen Meßprinzip (DE-OS 23 49 579) tauchen in eine elektrochemische Zelle, die eine Innenelektrolyt-Lösung enthält, eine erste sauerstoffsensitive Elektrode (Meßelektrode) und eine zweite Bezugselektrode im Abstand zur ersten Elektrode ein. Die elektrochemische Zelle ist von einer gaspermeablen Membran abgedeckt bzw. aus einer solchen gebildet. Die elektrochemische Zelle taucht in die Probe, deren Sauerstoff-Partialdruck zu messen ist, ein, wobei die gaspermeable Membran sauerstoffdurchlässig, jedoch für Flüssigkeiten oder Ionen undurchlässig ist.

Die sensitive erste Elektrode besteht dabei aus den Metallen Wolfram, Molybdän, Tantal und deren Legierungen, wobei deren Halbzellen-Potential das Potential einer Korrosionsreaktion darstellt, das sowohl von kathodischen (Elektronen liefernden) Auflösungsreaktionen der Metallelektrode als auch von der die Elektronen konsumierenden Elektroden-Oxidationsreaktionen abhängt. Hier sind also zwei Umstände wesentlich. Der Sauerstoff wird an der Elektrode reduziert, wodurch sich ein Potential einstellt, welches abhängt von der Sauerstoffaktivität. Die Elektronen, die für die Reaktion notwendig sind, werden von der Metallelektrode geliefert durch die Auflösungsreaktion. Die Potentialdifferenz zwischen der Meßelektrode und der Bezugselektrode, die eine Silber-Silberchlorid-Elektrode sein kann, wird zwar mit einem Voltmeter hoher Eingangsimpedanz gemessen, trotzdem tritt, je nach Kinetik der Korrosionsreaktion, ein mehr oder minder hoher Verbrauch von Elektrodenmaterial, aber auch vor allem von Sauerstoff auf. Die hohe Eingangsimpedanz des Voltmeters ist erforderlich, um das Reaktionsgleichgewicht möglichst wenig zu stören. Dieser bekannte potentiometrische Sauerstoffsensor ist speziell für die Bestimmung des Sauerstoff-Partialdrucks in Körperflüssigkeiten wie Blut bestimmt und kann für Messungen in vitro oder in vivo angewendet werden. Dieses bekannte potentiometrische Meßprinzip, welches den Übergang zu einer quasi Gleichgewichts-Meßmethode mit Bezug auf die ebenfalls häufig angewendeten amperometrischen Meßmethoden darstellt, auf die weiter unten noch eingegangen wird, weist zwar gegenüber diesen Vorteile auf wie beispielsweise deutliche Reduzierung des sonst üblichen Sauerstoffverbrauchs, was zu einem Sauerstoff-Partialdruck-Gradienten führt oder Abhängigkeit der Sensorsensitivität von Membraneigenschaften, Anströmungsgeschwindigkeit des Sensors und der Viskosität der Meßlösung, ist aber insofern problematisch, als die erzielbare Sensitivität a) abhängt von den Korrosionseigenschaften des verwendeten Metalls und b) beeinflußt wird von der Anreicherung von Korrosionsprodukten in der Innenlösung durch die Korrosionsreaktion, was zu einer nicht unerheblichen Drift des Sensors bei Langzeitanwendungen führen dürfte.

Eine weitere bekannte Möglichkeit zur Bestimmung von in Flüssigkeiten gelöstem Sauerstoff ist die amperometrische Meßmethode, die üblicherweise Sauerstoff-Meßzellen nach Clark benutzt. Auch bei dieser Meßmethode ist eine über eine für Sauerstoff permeable Membran mit der Meßlösung in Verbindung stehende Meßzelle vorgesehen, in deren Innerem eine Kathode, die meistens aus Gold besteht, und eine Anode, die meistens aus Silber besteht, angeordnet sind. Kathode und Anode tauchen in einen Innenelektrolyten in der Meßzelle ein. Nach Anlegen einer für die Reduktion von Sauerstoff typischen Polarisationsspannung läßt sich dann ein Strom messen (sogenannter Diffusions-Grenzstrom), der der Sauerstoffkonzentration im Meßmedium proportional ist. Die wesentlichen gravierenden Nachteile bei diesem Verfahren bestehen darin, daß:

- wegen der linearen Abhängigkeit des Meßstromes von der Aktivität des gelösten Sauerstoffs nur relativ hohe Sauerstoffkonzentrationen gemessen werden können;
- das Meßprinzip einen ständigen Verbrauch des Innenelektrolyten zur Folge hat (Ursache für Drifterscheinungen);
- das Meßmedium durch ständige Sauerstoffreduktion beeinflußt wird (Bildung eines Sauerstoff-Partialdruck-Gradienten) und damit bei mangelhafter Konvektion das Signal keinen stabilen Wert erreicht;
- die Sensitivität des Sensors sich mit oft nicht zu vermeidender Änderung unter anderem der Membraneigenschaften, der Anströmungsgeschwindigkeit und der Viskosität der Meßlösung verändert.

Der Erfindung liegt daher die Aufgabe zugrunde, einen potentiometrischen Sauerstoffsensor zu schaffen, der im gesamten relevanten Anwendungsbereich von mit Sauerstoff angereicherter Probe, luftgesättigter Probe bis in den Sauerstoff-Spurenbereich (unterhalb 1 ppb) hohe Sensitivität aufweist und dabei einfach aufgebaut und kostengünstig und problemlos herzustellen ist und einwandfreie Meßergebnisse bei niedrigen Temperaturen liefert.

Vorteile der Erfindung

Die Erfindung löst diese Aufgabe mit den kennzeichnenden Merkmalen des Hauptanspruchs und hat den Vorteil, daß durch die Verwendung von elektronisch leitenden Übergangsmetalloxiden als sauerstoffsensitive Elektrodenmaterialien
- ein großer Meßbereich (<0.001 ppm - >8.3 ppm) erzielt werden kann bei
- schneller Ansprechzeit,
- hoher (elektro)chemischer Stabilität des Elektrodenmaterials bei vernachlässigbarer Veränderung der Innenlösung durch Elektrodenreaktionen,
- ohne Beeinflussung des Meßmediums durch Sauerstoffverbrauch. Ferner ergibt sich
- kein Einfluß von Membraneigenschaften oder Anströmgeschwindigkeiten auf die Sensitivität oder die Genauigkeit des Meßergebnisses.

Von besonderer Bedeutung bei vorliegender Erfindung ist die sehr geringe Potentialdrift, die den Einsatz der Erfindung gerade für Langzeitmessungen geeignet macht, bei hoher Zuverlässigkeit und, wie die im folgenden noch angegebenen Meßdaten aufzeigen, sehr guter Reproduzierbarkeit der Meßergebnisse.

Die Erfindung verwendet daher ebenfalls das potentiometrische, eingangs genannte Meßprinzip, wobei -je nach Anwendungsfall - direkt in der Probe gemessen werden kann oder auch über eine für Sauerstoff permeable Membran Innenlösung und Meßlösung getrennt sein können, zeigt aber sehr gute Reversibilität bei Sauerstoff-Aktivitätsänderungen, bei nur sehr geringer Potentialdrift, wobei vor allen Dingen die bisher nicht erreichte Fähigkeit eines Spurennachweises von Sauerstoff von besonderer Bedeutung ist.

Vorteilhafte Ausgestaltungen der Erfindung sind Gegenstand der Unteransprüche und in diesen niedergelegt.

Zeichnung

Ausführungsbeispiele der Erfindung sind in der Zeichnung dargestellt und werden in der nachfolgenden Beschreibung näher erläutert. Es zeigen:

Fig. 1 stark schematisiert den grundsätzlichen Aufbau einer elektrochemischen Zelle zur Durchführung der erfindungsgemäßen potentiometrischen Sauerstoff-Partialdruckmessung und die

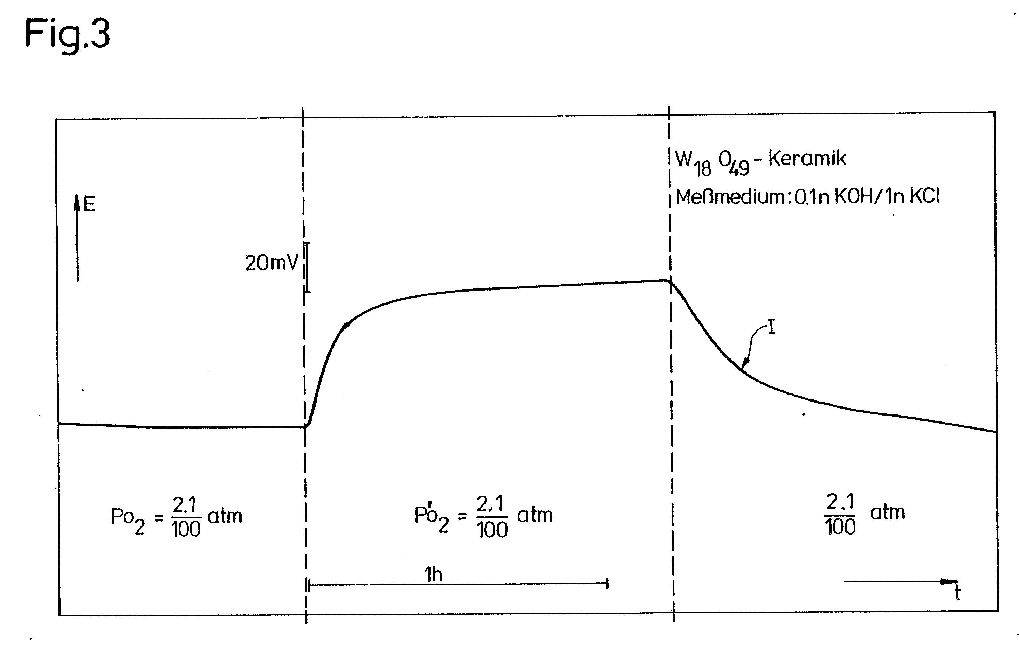

Fig. 2 und 3 den Verlauf von durch Messung ermittelten Meßpotentialen über der Zeit in Abhängigkeit vom Sauerstoff-Partialdruck für zwei verschiedene Elektrodenmaterialien der Meßelektrode, während die

Fig. 4, 5 und 6 in Form von Vergleichsdiagrammen das Meßpotential über der Zeit zeigen und

Fig. 7 die Meßwerte von Fig. 6 über der Konzentration des gelösten Sauerstoffs darstellt.

Beschreibung der Ausführungsbeispiele

Der Grundgedanke vorliegender Erfindung besteht darin, bei einer nach dem potentiometrischen Meßprinzip arbeitenden chemischen Meßzelle zur Bestimmung des Sauerstoff-Partialdrucks die sauerstoffsensitive Halbzelle aus einem elektronisch leitenden Übergangsmetalloxid herzustellen, wobei das Übergangsmetall aus der IV., V., VI., VII. und VIII. Nebengruppe des Periodensystems stammt und vorzugsweise Wolfram oder Niob ist. Dabei ist es unerheblich mit welchem Verfahren das Elektrodenmaterial hergestellt wird und welche geom. Form die Elektrode schließlich hat. Denkbar ist z.B. die Herstellung als Preßling aus vorher durch Festkörperreaktion gewonnenem Übergangsmetalloxid-Pulver oder eine planare Elektrodenkonfiguration, hergestellt mittels Dickschicht- oder Aufdampftechniken.

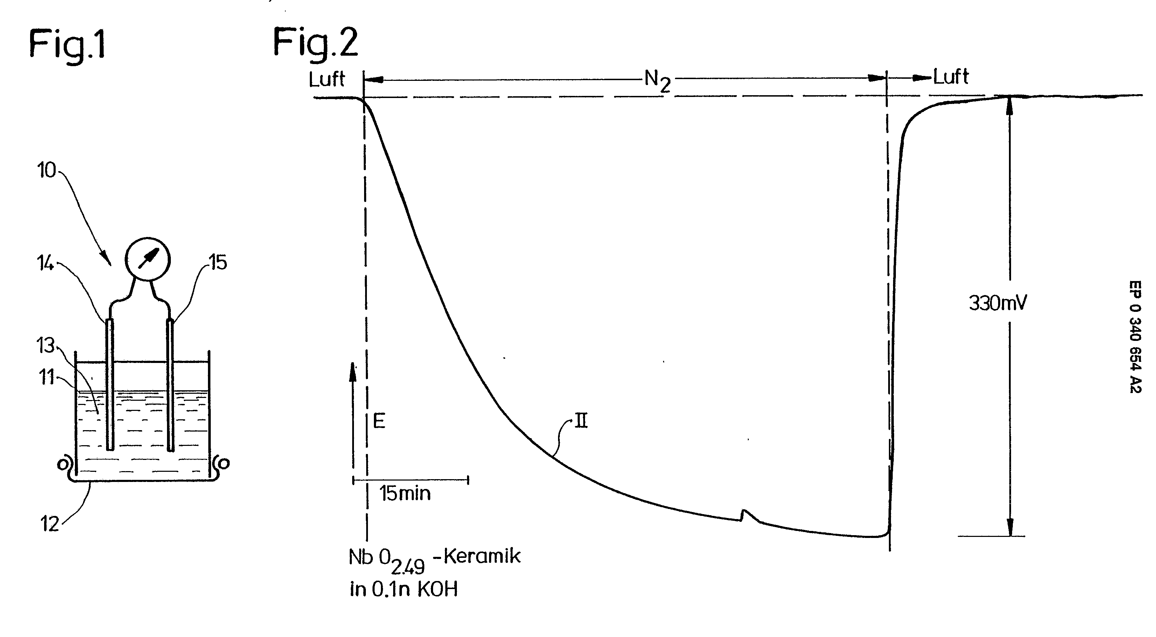

In Fig. 1 ist ein insgesamt mit den anderen Komponenten eine elektrochemische Zelle 10 bildender Behälter 11 gezeigt, der dort, wo er in die Meßlösung taucht, durch eine gaspermeable Membran 12 abgedeckt ist. Die Membran kann aus beliebigen, hierzu geeigenten Materialien bestehen; sie muß für Flüssigkeiten jeder Art bzw. für Ionen nichtpermeabel sein. Teflon ist ein geeignetes Material; weitere Materialien für eine solche Membran sind beispielsweise in der weiter vorn schon erwähnten DE-OS 23 49 579 als geeignet angegeben.

In den vom Gefäß 11 eingeschlossenen Innenelektrolyten 13 taucht eine erste sauerstoffsensitive Meßelektrode 14 ein, die die erste Halbzelle bildet; in üblicher Weise ist eine zweite Halbzelle 15 als Referenzelektrode vorgesehen, die ebenfalls in den Innenelektrolyten eintaucht.

Die mit den beiden Halbzellen 14 und 15 in Kontakt stehenden Elektrolytlösung

a) kann so ausgebildet sein, daß sie zusammen mit der Referenzelektrode 15 ein konstantes Halbzellenpotential liefert. Die Bezugselektrode kann eine Silber-Silberhalogenid-Bezugselektrode sein, vorzugsweise aus Silber-Silberchlorid bestehen, alternativ kann jedoch die Innenlösung auch über einen Elektrolytschlüssel elektrisch mit der ansonsten abgeschlossenen Referenzhalbzelle verbunden sein;

b) muß für alle anderen Spezies, die neben der Reaktion mit Sauerstoff zur EMK beitragen, konstante Aktivität aufweisen. Dies sind insbesondere die Protonen (pH-Wert) und durch die Elektrodenreaktion mit Wasser auftretende Reaktionsprodukte wie im Falle von Wolframoxid bzw. Nioboxid die Ionen $WO_4^{2-}$ und $NbO_4^{3-}$.

Hiermit ist gemeint, daß man durch die Reaktion der Elektroden mit Wasser eine zum Teil selektive Herauslösung der Oxide bekommt, wobei dieser Vorgang aber nach kurzer Zeit stehen bleibt. Die Konzentration der Ionen, die sich dabei bilden, muß in der Innenlösung konstant gehalten werden. Die ist auch ein Unterschied zu der weiter vorn schon erwähnten Korrosionsreaktion, wo eine irreversible Reaktion auftritt, die nicht stehen bleibt. Bei der Erfindung bildet sich die Veränderung der Oberfläche anfangs und bleibt dann stehen.

Die vorzugsweise hoch sauerstoffdurchlässige, ionenundurchlässige, nicht diffusionsbegrenzende (Kunststoff)Membran 12 trennt den Innenelektrolyten und die Elektrodenanordnung von der Meßprobe, in welche die so gebildete elektrochemische Zelle eintaucht und deren Sauerstoff-Partialdurck zu messen ist.

Entscheidendes Merkmal vorliegender Erfindung ist die Ausbildung der sauerstoffsensitiven Halbzelle 14, also das Material dieser Elektrode aus einem elektronisch leitenden Oxid, welches mindestens ein Übergangsmetall der IV., V., VI., VII. oder VIII. Nebengruppe des Periodensystems enthält und als weitere Komponenten Oxide der Elemente aus der II. Hauptgruppe oder III. Nebengruppe des Periodensystems enthalten kann.

Hierzu ist noch folgendes zu bemerken: Metalloxide sind normalerweise elektrisch nichtleitend; die Verwendung eines Übergangsmetalloxids und die Sicherstellung von dessen elektronischer Leitfähigkeit beruht darauf, daß das jeweils verwendete Übergangsmetalloxid nicht in der bis zur höchsten Stufe oxidierten Komponente wie beispielsweise $WO_3$ vorliegt, sondern auch entsprechend reduzierte Oxidkomponenten enthält. So wird nicht das voll oxidierte $WO_3$, welches praktisch einen Isolator bildet, verwendet, sondern ein Wolfram-Oxid der Zusammensetzung $WO_x$, wobei x etwa zwischen 2 und 3 liegt. Ein ähnlicher Effekt wird durch die Besetzung von kristallographisch wohldefinierten Leerstellen einer oxidischen Struktur mit Kationen erreicht, ohne deren kristallographischen Charakter zusätzlich zu verändern. Im vorliegenden Beispiel ist dies die statistische Besetzung der Plätze zwischen den $BO_6$-Oktaedern in der Perowskitstruktur mit La.

Verwendet man Niob als Übergangsmetall, dann wird auch hier nicht die hochoxidierte Form $Nb_2O_5$ verwendet, sondern eine entsprechend reduzierte Zusammensetzung $NbO_x$ mit x zwischen etwa 2 bis 2,5. Dies sind nur Beispiele einer möglichen Auswahl und einer entsprechenden Zusammensetzung geeigneter Übergangsmetalle.

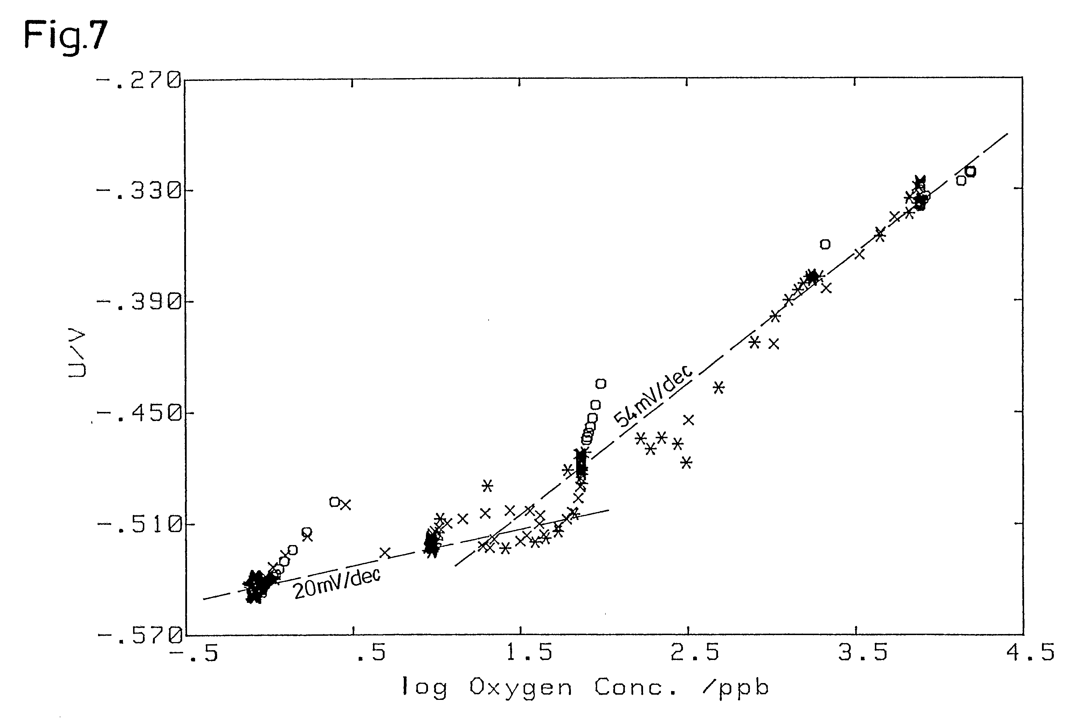

Die vorliegende Erfindung wird im folgenden noch genauer anhand von Beispielen in Verbindung mit den in den Figuren 2 und 7 gezeigten Meßkurven erläutert.

## 1. Beispiel

Eine Wolframoxid-Keramik der Zusammensetzung $W_{18}O_{49}$ wurde durch Heißpressen hergestellt. Anschließend wurde das Material mit einem ohmschen Kontakt versehen und die EMK der so hergestellten Meßhalbzelle gegen eine Referenzhalbzelle in 0.1N KOH als Innenelektrolyten in Abhängigkeit vom Sauerstoff-Partialdruck $p_{O2}$ gemessen. Hierbei ergab sich ein Kurvenverlauf I des gemessenen Potentials E über der Zeit, wobei zweimal zwischen verschiedenen Sauerstoffkonzentrationen bzw. Sauerstoffpartialdrücken gewechselt wurde. Die Messung erfolgte unter Verwendung eines Sauerstoff/Stickstoff-Gasgemisches mit einstellbarem Sauerstoff-Partialdruck, welches in eine Lösung eingeleitet wurde. Nach Erzielung des Gleichgewichts erfolgte die Potentialmessung; man erkennt, daß sich im Wechsel von einem ersten Sauerstoff-Partialdruck $p_{O2}$ = 2,1/100 atm zu $p'_{O2}$ = 21/100 atm sehr rasch ein auswertbarer Anstieg ergibt, mit einem entsprechenden nachfolgenden Abfall bei erneutem Wechsel auf den ursprünglichen Sauerstoff-Partialdruck.

## 2. Beispiel

Der Kurvenverlauf II in Fig. 2 zeigt die vorteilhaften Eigenschaften der erfindungsgemäßen sauerstoffsensitiven Halbzelle noch markanter.

Hierbei wurde entsprechend obigem Verfahren eine Nioboxid-Keramik der Zusammensetzung $NbO_{2.49}$ hergestellt und ebenfalls die EMK-Abhängigkeit vom Sauerstoff-Partialdurck $P_{O2}$ bestimmt. Hierbei wurde so vorgegangen, daß ausgehend von dem normalen Sauerstoff-Partialdruck in Luft dieser auf nahezu NUll reduziert wurde, d.h. die Messung für die in der Darstellung der Fig. 2 erkennbare Zeitdauer (ein Zeitmaßstab ist stets mit angegeben) mit reinem Stickstoff erfolgte; bei nachfolgendem Wechsel des Sauerstoff-Partialdrucks auf den dem Partialdruck in Luft entsprechenden Wert ergab sich ein sofortiger steiler Anstieg bis praktisch auf den ursprünglichen Wert des gemessenen Potentials, also im wesentlichen volle Reversibilität. Die gemessene Potentialdifferenz zwischen Sauerstoff-Partialdruck $p_{O2}$ - 0 und $p_{O2}$ = 21/100 atm betrug bei diesem Ausführungsbeispiel 330 mV.

Geht man von einer durchschnittlichen Sensitivität der Messung von etwa 50 mV/dec aus, dann liegt der Diagrammdarstellung der Fig. 2 eine Messung über etwa 6 Dekaden Sauerstoff-Partialdruck zugrunde, so daß erkennbar ist, daß die Erfindung auch noch für den Spurennachweis von Sauerstoff geeignet ist.

## 3. Beispiel

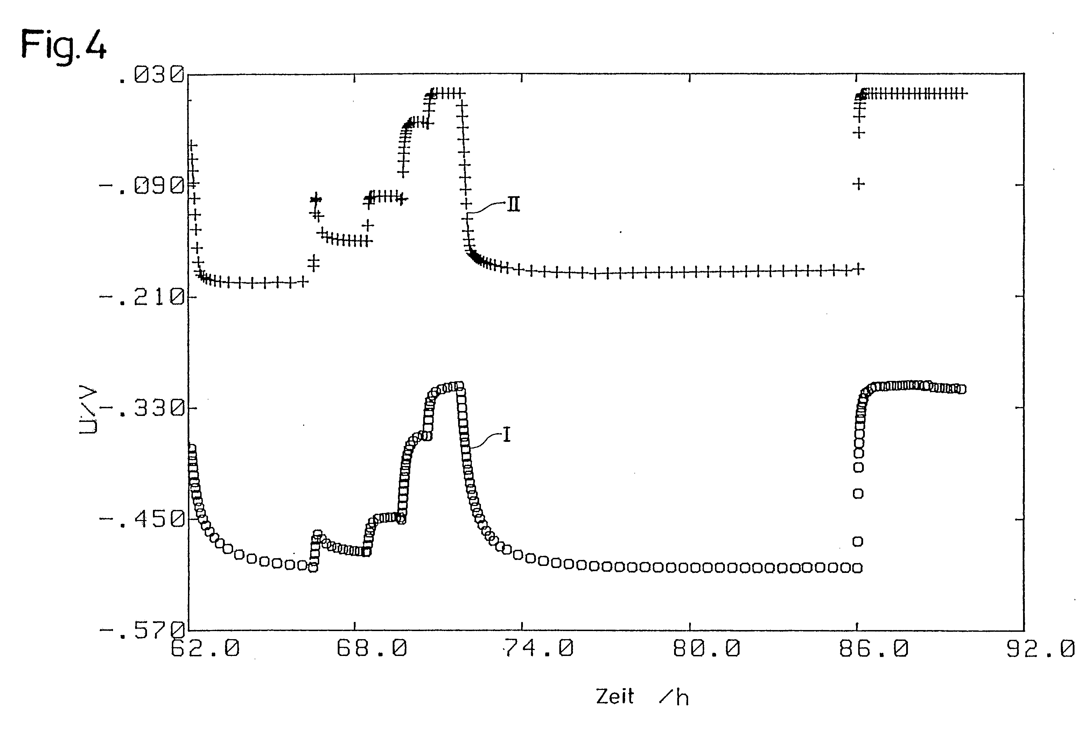

Die in Fig. 4 gezeigten Kurvenverläufe beziehen sich auf eine $La_{0.175}WO_3$(III)-Einkristall-Elektrode, wobei die Kristallherstellung nach einem bekannten elektrochemischen Verfahren durchgeführt werden kann.

Der Kurvenverlauf I zeigt den Verlauf der EMK über der Zeit als Funktion der Aktivität des gelösten Sauerstoffs in einer Lösung von 0.1N KCl/0.1N KOH/0.1M $Na_2WO_4$ (T = 17° C). Ein unabhängiges Maß für die tatsächlich vorliegende Sauerstoff-Aktivität in der Lösung, wurde durch die Messung des Sauerstoff-Partialdrucks ($p_{O2}$) über der Lösung mit einem $Pt/ZrO_2/Pt$ - Gassensor (λ-Sonde, T = 810° C) simultan registriert (Kurve II). Aus dem über die EMK der λ-Sonde bestimmten Sauerstoff-Partialdruck ($EMK_\lambda = E_o + RT/4F$ ln$p_{O2}$) wird unter Einbeziehung der Temperatur und der Ionenkonzentration der Lösung bzw. des Gesamtdrucks in der Meßzelle die Konzentration des gelösten Sauerstoffs berechnet (siehe BSP. 5, Fig. 7). Fig. 4 belegt die außerordentlich gute Potentialkonstanz, Reversibilität und Sensitivität der Meßzelle nach Anspruch 1 im Vergleich zur Referenzmessung mit der λ-Sonde.

## 4. Beispiel

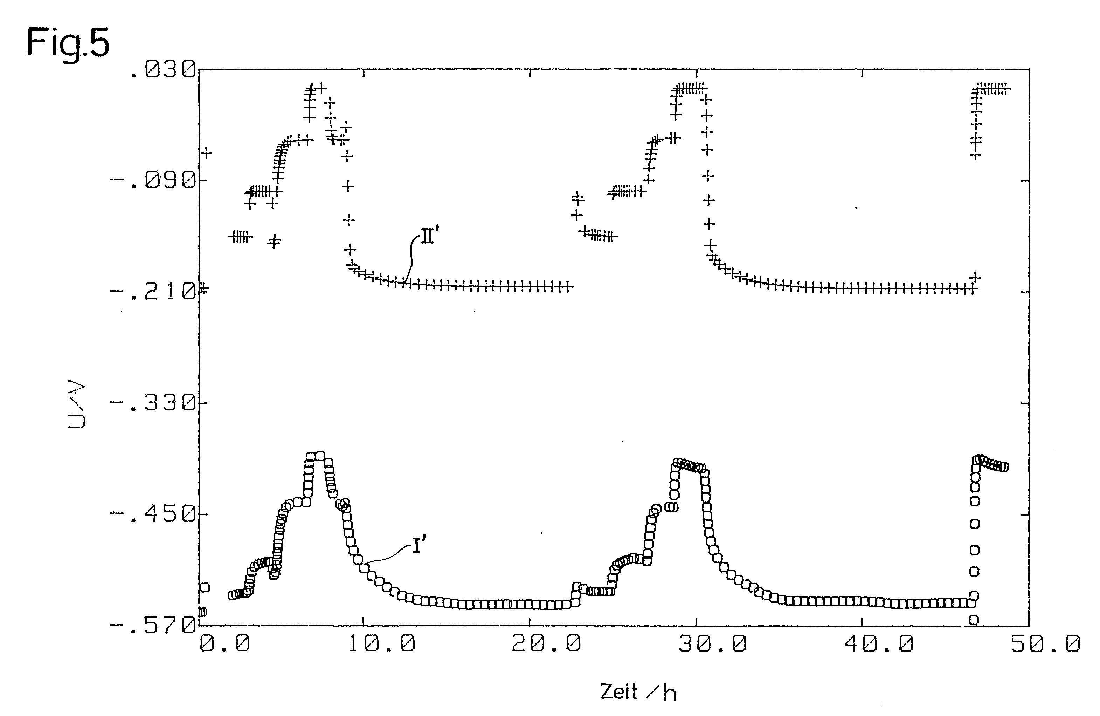

Nach der Methode im dritten Beispiel wurden die Sensoreigenschaften einer phasenreinen $La_{0.2}WO_3$-Keramik gemessen, die durch Heißpressen hergestellt wurde. Der Kurvenverlauf der Fig. 5 zeigt die Meßergebnisse bei I', während der Vergleichsverlauf wieder oberhalb bei II' dargestellt ist. Gemessen wurde in einer Lösung von 0.1N KCl/0.1N KOH/0.1M $Na_2WO_4$, wie auch beim dritten Beispiel.

## 5. Beispiel

Ebenfalls nach der Methode in (3) wurden die Sensitivitätseigenschaften einer 98 % $La_{0.2}WO_3$ + 2 % $WO_2$-Keramik (hergestellt durch Heißpressen) gemessen. Sie zeigt ebenfalls außerordentlich gute Sensoreigenschaften. Dieses Beispiel belegt die extrem gute Reversibilität bei zyklischem Überstreichen des Sauerstoffmeßbereichs.

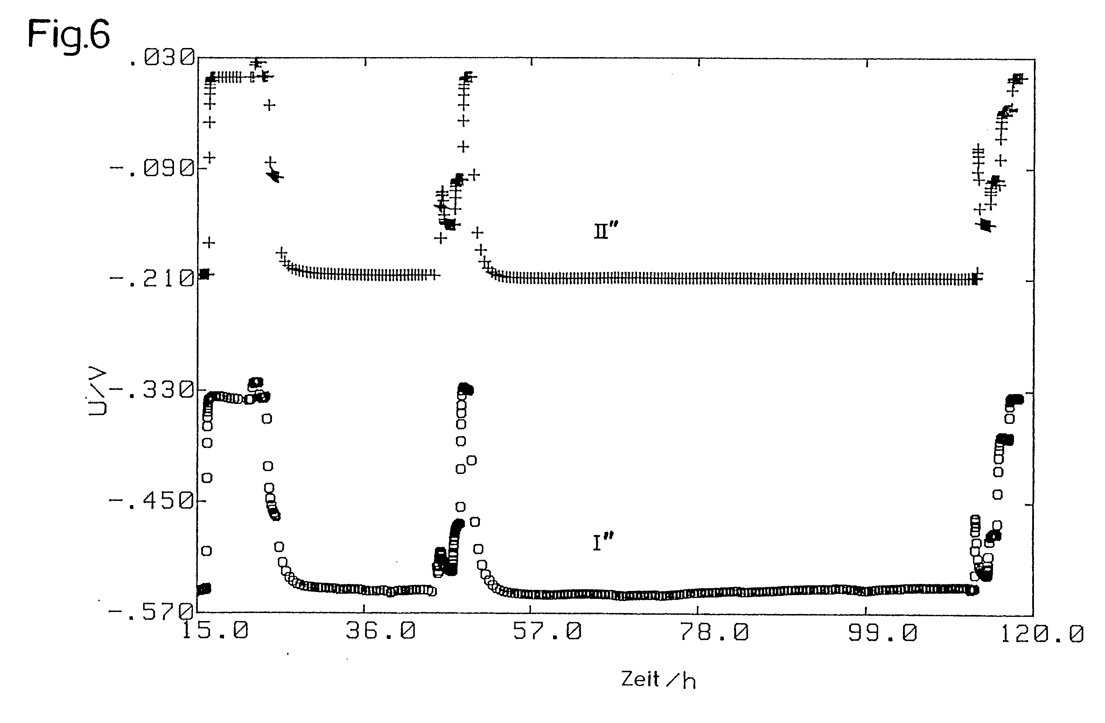

Besonders eindrucksvoll zeigen die in Fig. 7 aufgetragenen Meßdaten aus Fig. 6 die lineare Abhängigkeit der EMK der Meßzelle vom Logarithmus der Konzentration des gelösten Sauerstoffs (bestimmt aus der EMK der λ-Sonde) und die außerordentlich gute Reproduzierbarkeit der EMK bei mehrmaligem zyklischen Überstreichen des Sauerstoff-Aktivitätsbereichs. Hierbei ergibt sich oberhalb eines Punktes von $10^{1,5}$ ppb ein lineares Verhalten mit einer numerischen Sensitivität von 54 mV/dec, während unterhalb dieses Punktes die Sensitivität geringer ist und bei etwa 20 mV/dec liegt. Wesentlich ist hierbei aber, und dies kann man aus dem Diagramm der Fig. 7 gut erkennen, daß die Meßpunkte reproduzierbar sind, sich meßtechnisch also keine Probleme ergeben, denn der Kurvenverlauf in Fig. 7 zeigt eine sehr große Anzahl von Meßpunkten. Die verschiedene Kennzeichnung der Meßpunkte Kreuze, Sterne, Ringe, macht die Unterscheidung von nacheinander durchfahrenen Meßzyklen möglich, wobei man immer wieder auf die gleichen, in dem Diagramm der Fig. 7 dann schon stark geschwärzten Meßpunkte beim Datensammeln zurückkehrt. Die niedrigste einstellbare Sauerstoffkonzentration von etwa $10^{-0,7}$ ppb stellt die Grenze der Meßapparatur und keineswegs die Sensitivitätsgrenze der Meßzelle nach Anspruch 1 dar.

Abweichungen der Meßdaten von der Linearität zwischen den Häufungspunkten (Fig. 7) sind auf Nicht-Gleichgewichtszustände des $O_2$-Partialdrucks zwischen eingestelltem Gasgemisch un der aktuellen Sauerstoffkonzentration im Elektrolyten zurückzuführen und treten immer während der Änderung des $N_2/O_2$-Gemisches auf. Es handelt sich also hierbei um einen Meßeffekt und nicht um eine Sensoreigenschaft.

Die durch die Erfindung gewonnenen Erkenntnisse beruhen auf Untersuchungen der Elektrodenprozesse der in den Beispielen genannten Verbindungen mittels elektrochemischer und oberflächenanalytischer Untersuchungsmethoden. Im folgenden wird versucht, die charakteristischen Elektrodenprozesse zusammenfassend zu schildern, um die Funktionsweise des erfindungsgemäßen Sensors verständlich zu machen. Es versteht sich, daß die folgenden Ausführungen die Erfindung nicht einschränken.

Das wichtigste Ergebnis der Untersuchungen ist die nach dem Stand der Technik unerwartete Erkenntnis, daß das Elektrodenmaterial, so wie es nach Beendigung der Herstellungsprozesse vorliegt, keine oder nur schlechte $O_2$-Sensitivität aufweist. Nach dem Eintauchen in die Elektrolytlösung reagiert das Übergangsmetalloxid solange irreversibel mit dieser, bis die sich dabei bildende neue, $O_2$-sensitive Oberfläche (Deckschicht) im thermodynamischen Gleichgewicht mit der Lösung ist. Erst wenn diese irreversiblen Vorgänge zum Stillstand kommen, d.h. die Elektrode gegen die Lösung chemisch stabil ist, wird die EMK, d.h. das Sensorsignal von reversiblen Prozessen alleine bestimmt.

An den Beispielen $La_{0.175}(111)$ und $W_{18}O_{49}$ konnte durch Aufnahme von Röntgen-Photoelektronen-Spektren (XPS) jeweils vor und nach dem Eintauchen in den Elektrolyten gezeigt werden, daß durch selektive Auflösung der vollständig oxidierten Komponente ($WO_3$) der Probe unter Bildung von $WO_4^{2-}$ die $O_2$-sensitive Deckschicht entsteht, welche einen niedrigeren Oxidationsgrad aufweist als das Elektrodeninnere. UV-Photoelektronen-Spektren (UPS) belegen, daß diese Deckschicht auch eine andere Valenzbandstruktur der Elektronenzustände aufweist. In Übereinstimmung mit EMK-Messungen in Abhängigkeit vom pH-Wert und von der $O_2$-Aktivität der Lösung muß angenommen werden, daß die mit UPS gefundene "Metallisierung der Elektrodenoberfläche" durch Bildung von neuen Elektronenzuständen mit aus der Lösung adsorbierten $OH^-$ die Generierung des Elektrodenpotentials durch reversible $O_2$-Adsorptions-/Desorptionsreaktionen erst ermöglicht oder zumindest erheblich begünstigt. Dieses Modell erklärt unter anderem die zunehmende $O_2$-Sensitivität der Elektrode mit steigendem pH-Wert der Innenlösung.

Die Studien ergaben auch, daß die Sauerstoff-Adsorptionsreaktion nicht alleine Potential bestimmend ist. Die EMK ist ein Mischpotential, das zusätzlich zur beschriebenen Reaktion mit gelöstem Sauerstoff noch durch weitere reversible Reaktionen bestimmt wird, an denen Protonen und Auflösungsprodukte des Elektrodenmaterials (z.B. $WO_4^{2-}$, siehe oben) beteiligt sind.

Zur Verdeutlichung des Sachverhalts seien für $La_xWO_3$ als Elektrodenmaterial beispielhaft einige wichtige Reaktionen angeführt:

$$WO_3 + 2OH^- \rightarrow WO_4^{2-} + H_2O;$$

die Reaktion verläuft irreversibel (heterogene Auflösung des Elektrodenmaterials) unter Bildung der $O_2$-sensitiven Deckschicht.

$$O_2 + ne^- \leftrightarrow O_2^n(ads);$$

Potential generierende reversible Adsorptions-/Desorptionsreaktion des gelösten Sauerstoffs (n~1-2).

$$WO_2 + 2H_2O \leftrightarrow WO_4^{2-} + 4H^+ + 2e^-;$$

Beispiel für eine reversible, Potential generierende Reaktion, die zur Mischpotentialbildung beiträgt.

Aufgrund obiger Reaktionen läßt sich zum Beispiel die alleinige Abhängigkeit von EMK-Änderungen vom gelösten Sauerstoff dann erreichen, wenn der pH-Wert und die $WO_4^{2-}$-Aktivität (bzw. die $NbO_4^{3-}$-Aktivität bei Verwendung von Nb-Oxiden) konstant gehalten werden. Dies kann z. B. durch Vorlegen einer genügend hohen Aktivität der entsprechenden Spezies in der Innenlösung des Sensors geschehen.

Alle in der Beschreibung, den nachfolgenden Ansprüchen und der Zeichnung dargestellten Merkmale können sowohl einzeln als auch in beliebiger Kombination miteinander erfindungswesentlich sein.

**Ansprüche**

1. Potentiometrischer Sensor zur Bestimmung des Sauerstoff-Partialdrucks in einer flüssigen oder gasförmigen Probe, mit einer sauerstoffsensitiven Elektrode und einer Referenz-Elektrode (Silber-Silberhalogenid; Kalomel u. dgl.), einer Elektrolytlösung (Innenelektrolyt), in welche die beiden Elektroden eintauchen und die entweder selbst Anionen konstanter Aktivität enthält, die zusammen mit der Referenzelektrode eine Referenzhalbzelle bilden,oder mit einer getrennten Halbzelle über eine Elektrolytbrücke im elektrischen Kontakt steht und gegebenenfalls einer für Sauerstoff permeablen, jedoch für Ionen undurchlässigen Membran, die an ihrer einen Seite mit dem Innenelektrolyt und an ihrer anderen Seite mit der Probe in Kontakt steht, wobei der Sauerstoff ausschließlich über diese Membran in das Zelleninnere bzw. an die sauerstoffsensitive Elektrode diffundiert, dadurch gekennzeichnet, daß die sauerstoffsensitive Elektrode aus einem elektronisch leitenden Übergangsmetall-Oxid besteht, das mindestens ein Übergangsmetall der IV., V., VI., VII. oder VIII. Nebengruppe des Periodensystems enthält und als weitere Komponenten einer Phase überwiegend Oxide der Elemente aus der II. Hauptgruppe oder III. Nebengruppe des Periodensystems inclusive der Lanthanide oder Mischungen aus beiden Gruppen enthält.

2. Potentiometrischer Sensor nach Anpsruch 1, dadurch gekennzeichnet, daß das Übergangsmetalloxid zur Strukturfamilie der Perowskite gehört, die die stöchiometrische Zusammensetzung $A_xBO_3$ aufweist, wobei

A eines der Elemente der II. Hauptgruppe des Periodensystems Be, Mg, Ca, Sr, Ba oder eines der Elemente der III. Gruppe des Periodensystems Sc, Y, La und die Lanthanide Ce, Pr, Nd, Pm, Sm, Eu, Gd, Tb, Dy, Ho, Er, Tm, Yb, Lu und Mischungen untereinander oder aus Elementen beider Gruppen ist und

B eines der Übergangsmetalle der IV. Nebengruppe des Periodensystems Ti, Zr oder Hf, oder eines der Übergangsmetalle der V. Nebengruppe des Periodensystems V, Nb oder Ta oder eines der Übergangsmetalle der VI. Nebengruppe des Periodensystems Cr, Mo, W oder eines der Übergangsmetalle der VII. Nebengruppe des Periodensystems,insbesondere Mn, Re oder eines der Übergangsmetalle der VIII. Nebengruppe des Periodensystems Fe, Ru, Os, Co, Rh, Ir, Ni, Pd, Pt

und Mischungen aus den Elementen sowohl innerhalb einer Gruppe oder aus Elementen verschiedener Gruppen ist.

3. Potentiometrischer Sensor nach Anspruch 2, dadurch gekennzeichnet, daß der Perowskit oder das dem Perowskiten eng verwandte Elektrodenmaterial eine Sauerstoff-Unterstöchiometrie aufweist mit der allgemeinen Formel $A_xBO_{3-y}$, wobei $0<y<0.2$.

4. Potentiometrischer Sensor nach Anspruch 1 bis 3, dadurch gekennzeichnet, daß das Elektrodenmaterial der sauerstoffsensitiven Elektrode entweder ein Halbleiter oder ein Metall ist und die elektronische Leitfähigkeit des Elektrodenmaterials mindestens $10^{-1}$ mS cm$^{-1}$ beträgt.

5. Potentiometrischer Sensor nach Anspruch 1 oder 4, dadurch gekennzeichnet, daß das Elektrodenmaterial der sauerstoffsensitiven Elektrode (14) ein binäres Oxid ist.

6. Potentiometrischer Sensor nach einem der Ansprüche 1 bis 5, dadurch gekennzeichnet, daß das Übergangsmetall Wolfram oder Niob ist.

7. Potentiometrischer Sensor nach Anspruch 5 oder 6, dadurch gekennzeichnet, daß das Elektrodenmaterial der sauerstoffsensitiven Elektrode (14) ein Wolframoxid der Zusammensetzung $WO_x$ mit $2<x<3$ ist.

8. Potentiometrischer Sensor nach Anspruch 5 oder 6, dadurch gekennzeichnet, daß das Elektrodenmaterial der sauerstoffsensitiven Elektrode (14) ein Nioboxid der Zusammensetzung $NbO_x$ mit $2<x<2.5$ ist.

9. Potentiometrischer Sensor nach einem der Ansprüche 1 bis 8, dadurch gekennzeichnet, daß das Elektrodenmaterial der sauerstoffsensitiven Elektrode (14) aus mehreren Phasen von Übergangsmetalloxiden bestehen kann, wobei mindestens eine Phase die hohe elektronische Leitfähigkeit nach Anspruch 2 aufweist.

10. Potentiometrischer Sensor nach einem der Ansprüche 1, 2 oder 4, dadurch gekennzeichnet, daß das Elektrodenmaterial die Zusammensetzung $La_xWO_3$ mit $0.025<x<0.275$ aufweist.

11. Potentiometrischer Sensor nach Anspruch 1, dadurch gekennzeichnet, daß der pH-Wert des Innenelektrolyts konstant ist und im Bereich oberhalb pH 4, insbesondere oberhalb pH 7 liegt.

12. Potentiometrischer Sensor nach Anspruch 1 bis 11, dadurch gekennzeichnet, daß die Aktivität der Reaktionsprodukte, die sich durch Reaktion des Elektrodenmaterials mit dem Innenelektrolyten bilden, sich in diesem lösen und zur Generierung der zu messenden EMK beitragen, im Innenelektrolyten konstant gehalten wird.

# Fig.1

# Fig.2

Luft ← N₂ → Luft

330mV

E

15min

Nb O$_{2,49}$ -Keramik
in 0,1n KOH

II

EP 0 340 654 A2

# Fig.3

W$_{18}$O$_{49}$ - Keramik

Meßmedium: 0.1n KOH/1n KCl

20mV

$Po_2 = \dfrac{2.1}{100}$ atm

$P\acute{o}_2 = \dfrac{2.1}{100}$ atm

$\dfrac{2.1}{100}$ atm

1h

I

E

t

EP 0 340 654 A2

# Fig.4

EP 0 340 654 A2

**Fig.5**

EP 0 340 654 A2

Fig.6

Fig.7

EP 0 340 654 A2